# EUROPÄISCHE PATENTSCHRIFT

(11) **EP 2 943 380 B1**
(45) Veröffentlichungstag und Bekanntmachung des Hinweises auf die Patenterteilung: **17.02.2021**
(21) Anmeldenummer: 13807936.3
(22) Anmeldetag: 11.12.2013
(51) Int. Cl.: B60T 17/04, F16L 35/00, F16J 13/24

(54) **EINRICHTUNG ZUM AUFZEIGEN VON DRUCKLUFT, LUFTAUFBEREITUNGSEINHEIT, KRAFTFAHRZEUG DAMIT UND VERFAHREN ZUM AUFZEIGEN VON DRUCKLUFT SOWIE HERSTELLEN EINER DERARTIGEN EINRICHTUNG ZUM AUFZEIGEN VON DRUCKLUFT**
DEVICE FOR DISPLAYING COMPRESSED AIR, AIR TREATMENT UNIT, MOTOR VEHICLE WITH SAME, AND METHOD FOR DISPLAYING COMPRESSED AIR AND PRODUCING SUCH A DEVICE FOR DISPLAYING COMPRESSED AIR
DISPOSITIF DE DÉTECTION D'AIR COMPRIMÉ, UNITÉ DE TRAITEMENT DE L'AIR, VÉHICULE AUTOMOBILE MUNI DUDIT DISPOSITIF ET PROCÉDÉ DE DÉTECTION D'AIR COMPRIMÉ, ET FABRICATION DUDIT DISPOSITIF DE DÉTECTION D'AIR COMPRIMÉ

(30) Priorität: 08.01.2013 DE 102013000206
(43) Veröffentlichungstag der Anmeldung: 18.11.2015
(73) Patentinhaber: WABCO GmbH, 30453 Hannover (DE)
(72) Erfinder: HANSEN, Yves, 30519 Hannover (DE)
(74) Vertreter: Lauerwald, Jörg
(86) Internationale Anmeldenummer: PCT/EP2013/003739
(87) Internationale Veröffentlichungsnummer: WO 2014/108156

(56) Entgegenhaltungen:
- EP-A1- 0 766 033
- EP-A1- 2 105 186
- GB-A- 1 209 972

## Beschreibung

Die Erfindung betrifft eine Einrichtung zum Aufzeigen von vorhandener Druckluft innerhalb eines druckluftbeaufschlagten Systems, eine Luftaufbereitungseinheit für eine Druckluftanlage eines Kraftfahrzeugs mit einem Mehrkreisschutzventil und einer Steuereinheit sowie ein Kraftfahrzeug damit. Ferner betrifft die Erfindung ein Verfahren zum Aufzeigen von Druckluft innerhalb eines druckluftbeaufschlagten Systems sowie ein Verfahren zum Herstellen einer derartigen Einrichtung zum Aufzeigen von Druckluft.

Aus der EP 2150186 A1 ist eine Entlüftungsvorrichtung für eine Druckluftaufbereitungsanlage und ein Verfahren zum Demontieren einer Lufttrocknerpatrone einer Druckluftaufbereitungsanlage bekannt.

Kraftfahrzeuge, insbesondere Nutzfahrzeuge, weisen üblicherweise mehrere Drucklufteinrichtungen bzw. pneumatische Systeme auf, die mit Druckluft versorgt werden. Derartige Drucklufteinrichtungen sind beispielsweise eine Luftfederung und eine Bremsanlage. Die für die Drucklufteinrichtungen benötigte Druckluft wird von einem Kompressor bereitgestellt. Die einzelnen Drucklufteinrichtungen sind an verschiedene Druckkreise, sog. Verbraucherkreise, angeschlossen, Um die einzelnen Druckkreise vor einem ungewollten Druckverlust zu schützen, wenn es in einem anderen Druckkreis zu einem Druckverlust kommt, ist jeder Druckkreis durch ein Kreissicherungsventil abgesichert. Der Druck in den einzelnen Druckkreisen ist durch Drucksensoren überwachbar. Ferner ist eine elektronische Steuereinheit vorgesehen, an welche die Drucksensoren angeschlossen sind.

Es ist bekannt, die Drucksensoren in der Steuereinheit zu integrieren. Nachteilig ist jedoch, dass bei einem Defekt eines oder mehrerer Drucksensoren die gesamte Steuereinheit ausgetauscht werden muss.

Es ist daher weiterhin bekannt, Drucksensoren mit geeigneten Mitteln zur lösbaren Befestigung direkt am Gehäuse eines Mehrkreissicherungsventils zu befestigen.

Sind die Drucksensoren in der Steuereinheit integriert, sind zum Entfernen der Steuereinheit nacheinander mehrere Befestigungsmittel zu lösen. Es entsteht daraufhin eine Leckage in den Dichtelementen, durch die evtl. vorhandene Druckluft aus dem System entweichen kann. Somit ist ein Ablassen des Systemdrucks durch die noch nicht komplett demontierte Steuereinheit möglich.

Sind die Drucksensoren jedoch direkt am Gehäuse des Mehrkreisschutzventils angeordnet, bleiben diese nach der Demontage der Steuereinheit weiterhin montiert. Beim Austausch einzeln montierter Drucksensoren besteht nun jedoch die Gefahr, wenn sich noch zu viel Druckluft im System befindet, dass der Drucksensor beim Lösen explosionsartig in die Umgebung katapultiert wird. Der Austausch einzelner Drucksensoren stellt somit ein erhöhtes Sicherheitsrisiko für den Monteur dar.

Der Erfindung liegt nach alledem die Aufgabe zugrunde, evtl. vorhandenen Druck innerhalb eines druckluftbeaufschlagten Systems anzuzeigen, um einen sicheren Austausch einzelner Systemkomponenten, wie beispielsweise Drucksensoren und/oder Magnetventile, zu ermöglichen.

Die Erfindung löst diese Aufgabe mit einer Einrichtung zum Aufzeigen von vorhandener Druckluft innerhalb eines druckluftbeaufschlagten Systems nach Anspruch 1, mit einer Luftaufbereitungseinheit nach Anspruch 5, mit einem Kraftfahrzeug nach Anspruch 9, mit einem Verfahren zum Aufzeigen von vorhandener Druckluft innerhalb eines druckluftbeaufschlagten Systems nach Anspruch 10 sowie mit einem Verfahren zum Herstellen einer Einrichtung zum Aufzeigen von vorhandener Druckluft nach Anspruch 11.

Insbesondere löst die Erfindung die Aufgabe mit einer Einrichtung zum Aufzeigen von vorhandener Druckluft innerhalb eines druckluftbeaufschlagten Systems, wobei die Einrichtung ein Durchgangsloch innerhalb eines Gehäuses eines druckluftbeaufschlagten Bauteils aufweist und wobei das Durchgangsloch eine Austrittsöffnung aus dem Gehäuse aufweist. Dabei ist das Durchgangsloch derart ausgestaltet, um als Drosselstelle den vorhandenen Druck in dem druckluftbeaufschlagten Bauteil zumindest innerhalb eines vorbestimmten Druckbereichs akustisch anzuzeigen und weist bspw. einen Durchmesser im Bereich von 0,2 mm bis 2 mm, bevorzugt 0,8 mm bis 1,2 mm und besonders bevorzugt 1 mm auf.

Erfindungsgemäß ist die Austrittsöffnung des Durchgangslochs mittels einer Gehäuseabdeckung druckdicht verschließbar. Nach dem Entfernen der Gehäuseabdeckung wird durch das Entweichen der vorhandenen Druckluft innerhalb des Druckbereichs ein Geräusch erzeugt. Dabei ist das Geräusch vorzugsweise ein Zischgeräusch und/oder ein Pfeifgeräusch und ist abhängig von dem vorhandenen Druck mit dem die Druckluft durch die Drosselstelle strömt.

Eine derartige Einrichtung zum Aufzeigen von vorhandener Druckluft ermöglicht vorteilhaft den sicheren Austausch einzelner Systemkomponenten eines druckluftbeaufschlagten Systems, wie beispielsweise Drucksensoren und/oder Magnetventile. Der Druck in der Drosselstelle entspricht vorteilhaft dem Systemdruck des druckluftbeaufschlagten Systems. Somit ist es mittels der erfindungsgemäßen Einrichtung möglich, den Systemdruck bis unter eine ungefährliche Druckschwelle abzusenken, um den Monteur nicht durch unter zu starkem Druck stehende Bauteile zu verletzen.

In einer bevorzugten Ausführungsform der Erfindung ist das Durchgangsloch derart angeordnet, um eine Verbindung zwischen einer Druckluftleitung innerhalb des druckluftbeaufschlagten Bauteils und der Atmosphäre außerhalb des druckluftbeaufschlagten Bauteils herzustellen. Dadurch kann nach Entfernen einer entsprechenden Abdeckung durch das Durchgangsloch im System vorhandene Druckluft entweichen, wodurch vorteilhaft angezeigt wird, dass in dieser Druckluftleitung noch Druckluft enthalten ist. Durch eine geeignete Anordnung einer oder mehrerer als Drosselstelle ausgebildeter Durchgangslöcher kann vorteilhaft das System besonders einfach kontrolliert bzw. auf vorhandenen Druck hin überwacht werden.

Gemäß einer weiteren bevorzugten Ausführungsform der Erfindung ist eine Dichtung, insbesondere ein dichtender O-Ring, zwischen der Austrittsöffnung des Durchgangslochs und der Gehäuseabdeckung angeordnet. Dabei handelt es sich bei der Dichtung bevorzugt um eine in die Gehäuseabdeckung integrierte Dichtung zum druckdichten Verschließen des Durchgangslochs mittels der Gehäuseabdeckung. Da somit ein Abdichten des Systems gegen die Atmosphäre erfolgt, kann vorteilhaft keine Druckluft aus dem System ungewollt entweichen.

In einer weiteren bevorzugten Ausführungsform der Erfindung weist das Durchgangsloch einen Durchmesser auf, welcher derart ausgestaltet ist, um einen Druck innerhalb eines anzuzeigenden Druckbereiches des druckluftbeaufschlagten Systems akustisch anzuzeigen. Dazu erzeugt die durch das Durchgangsloch ausströmende Druckluft ein Geräusch, insbesondere ein Zischgeräusch, dessen Frequenz und Schalldruckpegel innerhalb der Hörfläche eines durchschnittlichen menschlichen Ohres liegen. Bevorzugt ist der Durchmesser an den anzuzeigenden Druckbereich angepasst, so dass der Druck zwischen einem minimalen Druckluftwert und einem maximalen Druckluftwert akustisch aufgezeigt wird. Das Geräusch weist bspw. ein Spektrum auf mit Frequenzanteilen im Bereich von 20 Hz bis 20 kHz, bevorzugt von 2 kHz bis 4 kHz. Der signifikante Leistungsbereich des Geräusches, d.h. mindestens 90% der Leistung des Geräusches wird bevorzugt von den Frequenzanteilen zwischen 2 kHz und 4 kHz geliefert.

Ein zu großer Durchmesser des Durchgangslochs sorgt dafür, dass bei niedrigem Druck im System kein Geräusch wahrzunehmen ist, obwohl der Druck für einen Austausch einzelner Systemkomponenten gefährlich ist. Ein zu kleiner Durchmesser erzeugt hingegen ein Geräusch, welches möglicherweise zu leise ist, da zu wenig Luft entweichen kann. Ein optimal an den anzuzeigenden Druckbereich angepasster Durchmesser des Durchgangslochs sorgt vorteilhafter Weise dafür, dass das durch Ausströmen von Druckluft erzeugte Geräusch innerhalb der Hörfläche eines Durchschnittsmenschen liegt und von einem Monteur wahrgenommen werden kann. Ferner ist der Durchmesser des Durchgangslochs derart ausgestaltet, um das durch Ausströmen von Druckluft erzeugte Geräusch über einen Zeitraum anzugeben, der ausreichend lang ist, um von einem Monteur wahrgenommen zu werden. Beispielsweise beträgt die Dauer des erzeugten Geräusches 5 s bis 5 min, bevorzugt 30 s bis 2,5 min.

Gemäß einer weiteren bevorzugten Ausführungsform der Erfindung wird zur aerodynamischen Schallerzeugung in dem Durchgangsloch ein schwingungsfähiger Einsatz eingebracht, welcher den ausströmenden Luftstrom periodisch unterbricht und somit innerhalb des anzuzeigenden Druckbereiches ein tonales Geräusch, insbesondere ein Pfeifgeräusch, erzeugt. Der dadurch erzeugte Ton weist dabei in Abhängigkeit des schwingungsfähigen Einsatzes eine Grundschwingung mit einer Frequenz im Bereich von 20 Hz bis 20kHz, bevorzugt von 2 kHz bis 4 kHz auf.

Zur Erzeugung eines Pfeifgeräusches ist bspw. ein Einsetzen einer scharfkantigen Schneide oder ein ähnliches Hindernis innerhalb des durch das Durchgangsloch ausströmenden Luftstromes vorgesehen. Beim Anblasen der Schneide entstehen periodisch sich ablösende Wirbel innerhalb des Luftstromes, welche periodische Druckschwankungen in dem Durchgangsloch hervorrufen und somit ein Pfeifgeräusch erzeugen, dessen Grundschwingung eine Frequenz im Bereich von 20 Hz bis 20kHz, bevorzugt von 2 kHz bis 4 kHz aufweist.

Die Erfindung löst o. g. Aufgabe ferner mit einer Luftaufbereitungseinheit für eine Druckluftanlage eines Kraftfahrzeugs, insbesondere eines Nutzfahrzeugs, wobei die Luftaufbereitungseinheit ein Mehrkreisschutzventil und eine Steuereinheit aufweist. Des Weiteren weist die Luftaufbereitungseinheit eine erfindungsgemäße Einrichtung zum Anzeigen von vorhandener Druckluft innerhalb des Mehrkreisschutzventilgehäuses auf, wobei eine Austrittsöffnung des Durchgangslochs dieser erfindungsgemäßen Einrichtung durch das Gehäuse der Steuereinheit druckdicht verschließbar ist.

Werden zur Überwachung der einzelnen Drücke der Druckkreise bzw. Verbraucherkreise in dem Mehrkreisschutzventil Drucksensoren einzeln lösbar an dem Gehäuse des Mehrkreisschutzventils befestigt, so kann ein Austausch dieser Drucksensoren für einen Monteur gefährlich werden, wenn noch ein zu großer Restdruck oder gar der gesamte Systemdruck an den Drucksensoren anliegt.

Die erfindungsgemäße Luftaufbereitungseinheit hat den Vorteil durch eine entsprechende Einrichtung zum Aufzeigen vorhandener Druckluft den Systemdruck innerhalb eines vorbestimmten Druckbereiches akustisch anzuzeigen. Somit kann ein Monteur rechtzeitig gewarnt werden, falls der Druck im System zu groß ist, um gefahrlos ein oder mehrere druckluftbeaufschlagte Bauteile oder Systemkomponenten, insbesondere Drucksensoren und/oder Magnetventile, zu entfernen.

Gemäß einer bevorzugten Ausführungsform der Erfindung ist das Durchgangsloch derart angeordnet, um eine Verbindung einer Hauptversorgungsleitung am Eingangsport des Mehrkreisschutzventils mit der Atmosphäre herzustellen. Das Durchgangsloch ist daher von der Hauptversorgungsleitung am Eingangsport des Mehrkreisschutzventils durch das Mehrkreisschutzventilgehäuse nach außen geführt. Durch eine derartige Anordnung des Durchgangslochs kann vorteilhaft bis zum Erreichen eines vorbestimmten Schließdrucks der Ventile des Mehrkreisschutzventils Druckluft aus dem System entweichen. Das als Düse oder Drosselstelle ausgebildete Durchgangsloch zeigt somit den anliegenden Systemdruck, beispielsweise 13 bar, bis zum Erreichen des Schließdrucks der Ventile, beispielsweise 4,5 bar, akustisch an.

Gemäß einer weiteren bevorzugten Ausführungsform der Erfindung ist das Durchgangsloch derart ausgestaltet, um einen vorhandenen Systemdruck in dem Mehrkreisschutzventil zu reduzieren. Durch Freilegen des Durchgangslochs kann der Systemdruck in dem Mehrkreisschutzventil bis zum Erreichen des Schließdrucks der Ventile abgelassen werden. Somit wird ein vorhandener Druck nicht nur akustisch angezeigt sondern auch vorteilhaft abgelassen.

In einer weiteren bevorzugten Ausführungsform der Erfindung ist die Dichtung im Gehäuse der Steuereinheit außerhalb eines Innenraumes der Steuereinheit angeordnet. Es handelt sich hierbei bevorzugt um eine in das Gehäuse integrierte Dichtung, welche separat in das Gehäuse einsetzbar ist. Der Innenraum der Steuereinheit ist durch eine weitere Dichtung gegen Eindringen von Verschmutzungen zum Mehrkreisschutzventilgehäuse hin abgedichtet. Da Drucksensoren üblicherweise Relativsensoren sind, welche den Druckunterschied zwischen dem Systemdruck und dem Druck im Innenraum der Steuereinheit messen, würde bei einer Leckage in der Dichtung zum Durchgangsloch die Messung der Sensoren verfälscht werden, wenn die Dichtung zum Durchgangsloch im Innenraum der Steuereinheit angeordnet wäre. Daher ist die Dichtung zur Austrittsöffnung des Durchgangslochs vorteilhaft außerhalb des Innenraumes der Steuereinheit angeordnet.

Die Erfindung löst die o. g. Aufgabe ferner mit einem Kraftfahrzeug, insbesondere einem Nutzfahrzeug, welches eine erfindungsgemäße Luftaufbereitungseinheit für eine Druckluftanlage mit einer erfindungsgemäßen Einrichtung zum Aufzeigen von vorhandener Druckluft aufweist.

Des Weiteren löst die Erfindung die o. g. Aufgabe mit einem Verfahren zum Aufzeigen von vorhandener Druckluft innerhalb eines druckluftbeaufschlagten Systems, insbesondere innerhalb einer erfindungsgemäßen Luftaufbereitungseinheit.

Durch Entfernen einer Gehäuseabdeckung an einem druckluftbeaufschlagten Bauteil entweicht vorteilhaft aus dem druckluftbeaufschlagten System durch das als Drosselstelle ausgebildete Durchgangsloch evtl. im System vorhandene Druckluft. Dabei wird das Entweichen der Druckluft innerhalb eines vorbestimmten Druckluftbereichs akustisch angezeigt.

Mit dem erfindungsgemäßen Verfahren ist vorteilhaft ein sicherer Austausch einzelner Systemkomponenten eines druckluftbeaufschlagten Systems möglich, da nach Entfernen der Gehäuseabdeckung vorhandene Druckluft sicher aus dem System durch ein als Drosselstelle oder Düse ausgebildetes Durchgangsloch abgeblasen wird, wodurch ein Monteur vorteilhaft akustisch auf eine Gefahr hingewiesen wird.

Schließlich löst die Erfindung die o. g. Aufgabe mit einem Verfahren zum Herstellen einer erfindungsgemäßen Einrichtung zum Aufzeigen von vorhandener Druckluft innerhalb eines druckluftbeaufschlagten Systems. Dazu wird das Durchgangsloch mittels Bohren und/oder Fräsen von Außen durch das Gehäuse eines Mehrkreisschutzventils bis in eine Druckluftleitung des Mehrkreisschutzventils erzeugt. Ferner ist es denkbar das Durchgangsloch bereits im Gussverfahren bei der Herstellung des Gehäuses zu berücksichtigen. Dadurch würde vorteilhaft eine nachträgliche Bearbeitung des Durchgangslochs wegfallen. Dabei weist das Durchgangsloch einen Querschnitt auf, welcher das akustische Aufzeigen eines Drucks in der Druckluftleitung innerhalb eines anzuzeigenden Druckbereichs ermöglicht. Das Ausströmen der Druckluft aus dem als Drosselstelle oder Düse ausgebildeten Durchgangsloch erzeugt innerhalb des anzuzeigenden Druckbereichs somit ein Geräusch, welches für ein durchschnittliches menschliches Gehör hörbar ist.

Ferner ist das Durchgangsloch mittels einer Gehäuseabdeckung druckdicht verschließbar.

Ein derartiges Verfahren zum Herstellen einer erfindungsgemäßen Einrichtung zum Aufzeigen von Druckluft lässt sich einfach und kostengünstig durch das Bohren eines Durchgangslochs realisieren. Besonders vorteilhaft lässt sich der Querschnitt der Bohrung dem anzuzeigenden Druckbereich anpassen, so dass ein Ausströmen der Druckluft innerhalb des anzuzeigenden Druckbereichs hörbar ist. Das führt zu einer besseren Wartbarkeit der Luftaufbereitungseinheit.

Gemäß einer bevorzugten Ausführungsform der Erfindung wird das Durchgangsloch an einer Hauptversorgungsleitung am Eingangsport des Mehrkreisschutzventils angeordnet und durch die Steuereinheit druckdicht verschlossen. Durch eine derartige bevorzugte Anordnung ist es möglich, durch Entfernen der Steuereinheit den anliegenden Systemdruck in dem Mehrkreisschutzventil bis zum Erreichen des Schließdrucks der einzelnen Schutzventile sicher abzulassen und dem Monteur den Druck akustisch anzuzeigen.

Weitere Ausführungsformen der Erfindung ergeben sich aus den Ansprüchen sowie aus dem anhand der Zeichnung näher erläuterten Ausführungsbeispiel. In der Zeichnung zeigen:
- Fig. 1: ein Schaltbild eines Mehrkreisschutzventils mit Steuereinheit gemäß einem Ausführungsbeispiel und
- Fig. 2: eine schematische Teildarstellung eines Gehäuses eines druckluftbeaufschlagten Bauteils.

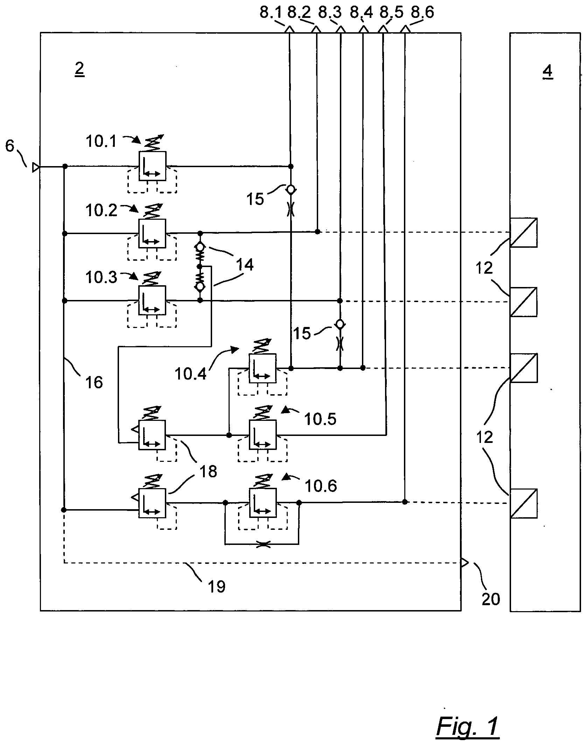

Fig. 1 zeigt ein Schaltbild eines Mehrkreisschutzventils 2 mit einer Steuereinheit 4. Das Mehrkreisschutzventil 2 weist einen Drucklufteingang 6 auf, über den dem Mehrkreisschutzventil 2 Druckluft, beispielsweise von einer hier nicht dargestellten Lufttrocknungseinrichtung, bereitgestellt wird.

In der Lufttrocknungseinrichtung wird die von einem Kompressor bereitgestellte Druckluft durch Lufttrocknungsmittel, wie beispielsweise ein Filter und ein Abscheider, von Partikeln und Feuchtigkeit befreit, da ansonsten die angeschlossenen Drucklufteinrichtungen beschädigt oder deren Funktion beeinträchtigt werden könnte.

Ferner weist das Mehrkreisschutzventil 2 Druckluftausgänge 8.1, 8.2, 8.3, 8.4, 8.5 und 8.6 zum Bereitstellen von Druckluft für verschiedene Verbraucherkreise auf. Die Verbraucherkreise können beispielsweise Betriebsbremskreise, ein Anhängerbremskreis, ein Feststellbremskreis, eine Luftfederungsanlage und/oder Nebenverbraucherkreise sein und sind durch jeweils ein als Überströmventil ausgebildetes Kreissicherungsventil 10.1, 10.2, 10.3, 10.4, 10.5 bzw. 10.6 abgesichert.

Zwischen den Kreissicherungsventilen 10.1 bis 10.6 und den Druckluftausgängen 8.1 bis 8.6 der einzelnen Verbraucherkreise können an der jeweiligen Verzweigungsleitung Drucksensoren 12 angeschlossen sein, die den Druck in den Verbraucherkreisen überwachen. Die Drucksensoren 12 geben den jeweiligen Druck als Drucksignal an eine elektronische Steuereinheit 4, welche vorzugsweise programmierbar ist und Steuer- und Regelfunktionen ausführt. Um zu verdeutlichen, dass es sich bei der Anschlussleitung der Drucksensoren 12 um eine Leitung mit signifikant kleinerem Durchmesser handelt und keine großen Luftmengen durch diese Leitung transportiert werden, ist die Anschlussleitung der Drucksensoren 12 in Fig. 1 mittels einer gestrichelten Linie dargestellt.

Nachfolgend ist die Funktion eines der Kreissicherungsventile 10.1 bis 10.6 beschrieben, wobei die Funktionsweise analog auf jedes der Kreissicherungsventile 10.1 bis 10.6 übertragbar ist.

Das Kreissicherungsventil 10 wird durch die am Arbeitseingang und am Arbeitsausgang anliegenden Drücke zusammen mit einer Federung gesteuert. Wenn der Arbeitseingang des Kreissicherungsventils 10 drucklos ist, nimmt das Kreissicherungsventil 10 durch die Kraft der Feder seine Sperrstellung ein und ist geschlossen.

Wird am Arbeitseingang des Kreissicherungsventils 10 Druck angelegt, öffnet das Kreissicherungsventil 10 bzw. nimmt es seine Durchgangsstellung ein, sobald ein für das Kreissicherungsventil 10 charakteristischer Öffnungsdruck erreicht ist. Strömt die Druckluft vom Arbeitseingang zum Arbeitsausgang des Kreissicherungsventils 10, wirkt der Druck am Arbeitsausgang unterstützend gegen die Kraft der Feder, so dass das Kreissicherungsventil 10 auch dann geöffnet bleibt, wenn der Druck am Arbeitseingang abfällt. Das Kreissicherungsventil 10 schließt erst wieder, wenn ein gegenüber dem Öffnungsdruck geringerer Schließdruck am Arbeitseingang erreicht bzw. unterschritten wird. Somit wird der anliegende Verbraucherkreis vor einer kompletten Entlüftung über das Kreissicherungsventil 10 geschützt, falls es durch einen Defekt an der Druckluftanlage zu einem Druckabfall am Arbeitseingang und/oder Arbeitsausgang des Kreissicherungsventils 10 kommt.

Die Rückschlagventile 14 sorgen dafür, dass eine vorbestimmte Reihenfolge der Belüftung der Verbraucherkreise eingehalten wird. Haben einige der Kreissicherungsventile 10 einen unterschiedlichen Öffnungsdruck, lassen sich die Verbraucherkreise derart belüften, so dass die Betriebsbremskreise zuerst belüftet werden und der letzte Verbraucherkreis Druckluft zum Lösen der Feststellbremse liefert. Dadurch wird gewährleistet, dass erst Druckluft zum Lösen der Feststellbremse bereitgestellt wird, wenn genug Druckluft für die Betriebsbremsen zur Verfügung steht.

Die weiteren Rückschlagventile 15 mit in Reihe geschalteten Drosseln sind für die Sicherheit in den Verbraucherkreisen angeordnet. Damit wird beispielsweise im Verbraucherkreis für die Feststellbremse im Falle eines Druckabfalls der Betriebsbremse das Lösen der Feststellbremse verhindert bzw. die Feststellbremse eingelegt.

Dem Kreissicherungsventil 10.6 mit einer parallel geschalteten Drossel ist ein Druckbegrenzungsventil 18 vorgeschaltet, welches den Druck in dem zugehörigen Verbraucherkreis auf einen maximal zulässigen Wert begrenzt. Den Kreissicherungsventilen 10.4 und 10.5 ist ebenfalls gemäß Fig. 1 ein Druckbegrenzungsventil 18 vorgeschaltet.

Über den Drucklufteingang 6 gelangt Druckluft von einem hier nicht dargestellten Kompressor in eine Hauptversorgungsleitung 16 des Mehrkreisschutzventils 2, von wo aus die Druckluft über die einzelnen Kreissicherungsventile 10.1 bis 10.6 auf die jeweiligen Verbraucherkreise an den Druckluftausgängen 8.1 bis 8.6 gegeben wird.

Ferner ist erfindungsgemäß ein Durchgangsloch 19 zum Aufzeigen von vorhandener Druckluft an der Hauptversorgungsleitung 16 angeordnet. Auch hier ist das Durchgangsloch 19 mit einer gestrichelten Linie dargestellt, um zu verdeutlichen, dass es sich bei dem Durchgangsloch 19 um eine Verbindung mit einem signifikant kleineren Durchmesser handelt. Bevorzugt ist das Durchgangsloch 19 in der Nähe der Steuereinheit 4 aus dem Gehäuse 21 des Mehrkreisschutzventils 2 mit einer Austrittsöffnung 20 herausgeführt.

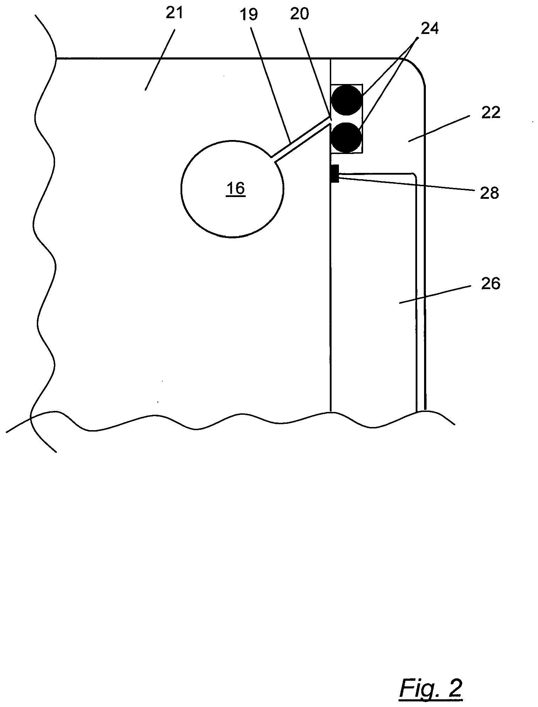

Fig. 2 zeigt eine mögliche Anordnung des Durchgangslochs 19, welches als sog. Sicherheitsbohrung durch das Gehäuse 21 des Mehrkreisschutzventils 2 bis in die druckluftführende Hauptversorgungsleitung 16 verläuft. Dabei weist das Durchgangsloch 19 einen Querschnitt auf, dessen Größe derart angepasst ist, um durch das Durchgangsloch 19 entweichende Druckluft innerhalb eines vorbestimmten Druckbereichs akustisch anzuzeigen, d.h. das Entweichen der Druckluft soll für ein durchschnittliches menschliches Gehör wahrnehmbar sein.

In dem in Fig. 1 dargestellten Ausführungsbeispiel wird der anzuzeigende Druckbereich durch den am Drucklufteingang 6 anliegenden Maximaldruck sowie den für die Kreissicherungsventile 10.1 bis 10.6 charakteristischen Schließdruck festgelegt und liegt üblicherweise zwischen 13 bar und 4,5 bar. Die Erfindung ist jedoch nicht auf diesen Druckbereich beschränkt. Der anzuzeigende Druckbereich ist abhängig von der jeweiligen Anordnung des Durchgangslochs 19 bzw. den vorhandenen Druck in derjenigen Druckluftleitung, an die das Durchgangsloch 19 angeordnet ist.

Ferner ist die Erfindung nicht auf eine Anordnung des Durchgangslochs 19 an der Hauptversorgungsleitung 16 beschränkt. Vielmehr soll das Durchgangsloch 19 derart angeordnet sein, um den anliegenden Druck an der zu entfernenden Systemkomponente akustisch anzuzeigen, um einem Monteur einen sicheren Austausch des Bauteils zu ermöglichen. Daher können erfindungsgemäß ein oder mehrere Durchgangslöcher 19 an jedwede Druckluft führende Leitung angeordnet sein, welche zum Austausch von einzelnen Bauteilen drucklos sein muss bzw. lediglich einen geringen Restdruck aufweisen darf.

Das in Fig. 2 dargestellte Durchgangsloch 19 ist vorzugsweise mittels Bohren in das Gehäuse 21 des Mehrkreisschutzventils 2 erzeugt worden und wird von einer Gehäuseabdeckung 22 über der Austrittsöffnung 20 druckdicht verschlossen. Dazu weist die Gehäuseabdeckung 22 bevorzugt eine integrierte Dichtung 24, insbesondere ein O-Ring, auf, welche in eine dafür vorgesehene Vertiefung in der Gehäuseabdeckung 22 eingepasst ist. Sind zum Aufzeigen von vorhandener Druckluft mehrere Durchgangslöcher 19 in dem Gehäuse 21 vorgesehen, so benötigt jedes Durchgangsloch 19 eine separate Dichtung 24.

Gemäß eines Ausführungsbeispiels der Erfindung ist die Gehäuseabdeckung 22 eine elektronische Steuereinheit 4 und weist zur Aufnahme von elektrischen Bauteilen einen Innenraum 26 auf, welcher über einen zur Atmosphäre hin ausgeglichenen Innendruck verfügt. Der Innenraum 26 ist mit einer weiteren Dichtung 28 gegenüber dem Mehrkreisschutzventil 2 gegen das Eindringen von Verschmutzungen abgedichtet.

Bevorzugt sind ein oder mehrere druckluftbeaufschlagte Systemkomponenten, insbesondere Drucksensoren und/oder Magnetventile, unterhalb der Gehäuseabdeckung 22 am Mehrkreisschutzventil 2 im Innenraum 26 der Steuereinheit 4 angeordnet. Sie sind beispielsweise durch eine Schnappkontur im Gehäuse 21 befestigt und mittels einer einfachen Zange demontierbar. Das hat den Vorteil, dass derartige Systemkomponenten in der Produktion schnell verbaut sind und bei einem Defekt einzeln und schnell zu tauschen sind.

Zum Austausch eines oder mehrerer Drucksensoren wird die Gehäuseabdeckung 22 durch Demontage der Steuereinheit 4 entfernt und somit die Austrittsöffnung 20 des als Drosselstelle ausgebildeten Durchgangslochs 19 freigelegt. Dadurch kann der Systemdruck aus der Hauptversorgungsleitung 16 des Mehrkreisschutzventils 2 in die Atmosphäre entweichen. Das Herausströmen der vorhandenen Druckluft erzeugt ein akustisches Signal, welches anzeigt, dass sich noch Druck im System befindet, und zwar so lange, bis der Schließdruck der Kreissicherungsventile 10 erreicht wird. Nach Entlüftung des Systems bis auf einen ungefährlichen Restdruck darf der Austausch der druckbeaufschlagten Bauteile, wie bspw. Drucksensoren, beginnen.

Wesentlich bei der Anordnung des Durchgangsloches 19 ist es, dass die Austrittsöffnung 20 des Durchgangslochs 19 außerhalb des Innenraumes 26 der Steuereinheit 4 angeordnet ist. Die unterhalb der Steuereinheit 4 befindlichen Drucksensoren messen nämlich als Relativsensoren den Druckunterschied zwischen dem Systemdruck und dem Druck im Innenraum 26 der Steuereinheit 4. Eine defekte Dichtung 24 des Durchgangsloches 19 würde bei einer Anordnung des Durchgangsloches 19 in den Innenraum 26 der Steuereinheit 4 zu einem Messfehler der Drucksensoren führen, wenn durch das Durchgangsloch 19 aufgrund einer defekten Dichtung 24 Druckluft in den Innenraum 26 der Steuereinheit 4 entweicht.

Durch eine derartige erfindungsgemäße Einrichtung zum Aufzeigen von vorhandener Druckluft im System, wird vorteilhaft die Wartung der Druckluftanlage vereinfacht, da nunmehr gefahrlos ein Austausch einzelner druckluftbeaufschlagter Systemkomponenten möglich ist.

Sämtliche in der vorstehenden Beschreibung sowie in den Ansprüchen genannten Merkmale sind erfindungsgemäß sowohl einzeln als auch in beliebiger Kombination miteinander einsetzbar. Die Offenbarung der Erfindung ist daher nicht auf die beschriebenen bzw. beanspruchten Merkmalskombinationen beschränkt. Vielmehr sind alle Kombinationen von Einzelmerkmalen als offenbart zu betrachten.

### Bezugszeichenliste

- 2: Mehrkreisschutzventil
- 4: Steuereinheit
- 6: Drucklufteingang
- 8, 8.1 bis 8.6: Druckluftausgänge
- 10, 10.1 bis 10.6: Kreissicherungsventile
- 12: Drucksensor
- 14: Rückschlagventile
- 15: weitere Rückschlagventile
- 16: Hauptversorgungsleitung
- 18: Druckbegrenzungsventil
- 19: Durchgangsloch
- 20: Austrittsöffnung
- 21: Gehäuse
- 22: Gehäuseabdeckung
- 24: Dichtung
- 26: Innenraum (der Steuereinheit 4)
- 28: weitere Dichtung

## Patentansprüche

1. Einrichtung zum Aufzeigen von vorhandener Druckluft innerhalb eines druckluftbeaufschlagten Systems, wobei das druckluftbeaufschlagte System ein Gehäuse (21) und eine Gehäuseabdeckung (22) aufweist,
**gekennzeichnet durch**
ein Durchgangsloch (19) innerhalb des Gehäuses (21) eines druckluftbeaufschlagten Bauteils des druckluftbeaufschlagten Systems, welches derart ausgestaltet ist, um als Drosselstelle den vorhandenen Druck in dem druckluftbeaufschlagten Bauteil, innerhalb eines vorbestimmten Druckbereichs, akustisch anzuzeigen, wobei eine Austrittsöffnung (20) des Durchgangslochs (19) durch die Gehäuseabdeckung (22) druckdicht verschließbar ist, wobei das Durchgangsloch (19) einen Durchmesser im Bereich von 0,2 mm bis 2 mm, bevorzugt 0,8 mm bis 1,2 mm und besonders bevorzugt 1 mm aufweist.

2. Einrichtung nach Anspruch 1,
**dadurch gekennzeichnet, dass**
das Durchgangsloch (19) derart angeordnet ist, um eine Verbindung zwischen einer Druckluftleitung innerhalb des druckluftbeaufschlagten Bauteils und der Atmosphäre außerhalb des druckluftbeaufschlagten Bauteils herzustellen.

3. Einrichtung nach Anspruch 1 oder 2,
**gekennzeichnet durch**
eine Dichtung (24), insbesondere ein O-Ring, welche zwischen der Austrittsöffnung (20) des Durchgangslochs (19) und der Gehäuseabdeckung (22) angeordnet ist und derart ausgestaltet ist, um das Durchgangsloch (19) durch die Gehäuseabdeckung (22) druckdicht zu verschließen.

4. Einrichtung nach einem der vorhergehenden Ansprüche,
**gekennzeichnet durch**
einen Durchmesser oder Querschnitt des Dichtungslochs (19), welcher derart ausgestaltet ist, um einen Druck innerhalb eines anzuzeigenden Druckbereichs des druckluftbeaufschlagten Systems mittels eines akustischen Signals anzuzeigen, wobei die Frequenz und der Schalldruckpegel des akustischen Signals innerhalb der Hörfläche eines durchschnittlichen menschlichen Ohres liegen.

5. Luftaufbereitungseinheit für eine Druckluftanlage eines Kraftfahrzeugs, insbesondere eines Nutzfahrzeugs, aufweisend ein Mehrkreisschutzventil (2) und eine Steuereinheit (4),
**gekennzeichnet durch**
eine Einrichtung zum Aufzeigen von vorhandener Druckluft mit einem Durchgangsloch (19) innerhalb eines Gehäuses (21) eines druckluftbeaufschlagten Bauteils des druckluftbeaufschlagten Systems, welches derart ausgestaltet ist, um als Drosselstelle den vorhandenen Druck in dem druckluftbeaufschlagten Bauteil, innerhalb eines vorbestimmten Druckbereichs, akustisch anzuzeigen, wobei das Durchgangsloch (19) innerhalb des Gehäuses (21) des Mehrkreisschutzventils (2) angeordnet ist und eine Austrittsöffnung (20) des Durchgangslochs (19) mittels der Steuereinheit (4) als Gehäuseabdeckung (22) druckdicht verschließbar ist.

6. Luftaufbereitungseinheit nach Anspruch 5,
**dadurch gekennzeichnet, dass**
das Durchgangsloch (19) von einer Hauptversorgungsleitung (16) am Eingangsport des Mehrkreisschutzventils (2) durch das Gehäuse (29) des Mehrkreisschutzventils (2) nach außen geführt ist.

7. Luftaufbereitungseinheit nach einem der Ansprüche 5 oder 6,
**gekennzeichnet durch**
eine Ausgestaltung des Durchgangslochs (19) derart, um einen vorhandenen Systemdruck in dem Mehrkreisschutzventil (2) zu reduzieren, insbesondere um den Systemdruck bis zu einem für im Mehrkreisschutzventil (2) vorhandene Kreissicherungsventile (10) charakteristischen Schließdruck zu reduzieren.

8. Luftaufbereitungseinheit nach einem der Ansprüche 5 bis 7,
**gekennzeichnet durch**
eine Anordnung der Dichtung (24) im Gehäuse der Steuereinheit (4) zum druckdichten Verschließen der Austrittsöffnung (20) des Durchgangslochs (19) außerhalb eines Innenraumes (26) der Steuereinheit (4), wobei der Innenraum (26) der Steuereinheit (4) durch eine weitere Dichtung (28) gegen das Gehäuse (21) des Mehrkreisschutzventils (2) abgedichtet ist.

9. Kraftfahrzeug, insbesondere Nutzfahrzeug,
**gekennzeichnet durch**
eine Einrichtung zum Aufzeigen von vorhandener Druckluft innerhalb eines druckluftbeaufschlagten Systems nach einem der Ansprüche 1 bis 4 und/oder
eine Luftaufbereitungseinheit für eine Druckluftanlage nach einem der Ansprüche 5 bis 8.

10. Verfahren zum Aufzeigen von vorhandener Druckluft innerhalb einer Luftaufbereitungseinheit nach einem der Ansprüche 5 bis 8,
**dadurch gekennzeichnet, dass**
durch Entfernen einer Gehäuseabdeckung (22) eines druckluftbeaufschlagten Bauteils Druckluft des druckluftbeaufschlagten Systems durch ein als Drosselstelle ausgebildetes Durchgangsloch (19) entweicht und
das Entweichen der Druckluft akustisch angezeigt wird.

11. Verfahren zum Herstellen einer Einrichtung zum Aufzeigen von vorhandener Druckluft innerhalb eines druckluftbeaufschlagten Systems nach einem der Ansprüche 1 bis 4,
**dadurch gekennzeichnet, dass**
das Durchgangsloch (19) mittels Bohren und/oder Fräsen durch das Gehäuse (21) eines druckluftbeaufschlagten Bauteils bis in eine Druckluftleitung erzeugt wird, wobei das Durchgangsloch (19) einen Querschnitt aufweist, welcher das akustische Aufzeigen eines Drucks in der Druckluftleitung innerhalb eines anzuzeigenden Druckbereichs ermöglicht und
das Durchgangsloch (19) mittels einer Gehäuseabdeckung (22) druckdicht verschlossen wird.

12. Verfahren nach Anspruch 11,
**dadurch gekennzeichnet, dass**
das Durchgangsloch (19) an einer Hauptversorgungsleitung (16) am Eingangsport eines Mehrkreisschutzventils (2) angeordnet wird.

## Claims

1. Device for indicating existing compressed air within a system which is loaded with compressed air, the system which is loaded with compressed air having a housing (21) and a housing covering (22), **characterized by** a through hole (19) within the housing (21) of a component which is loaded with compressed air of the system which is loaded with compressed air, which through hole (19) is configured so as to acoustically indicate, as a throttle point, the existing pressure in the component which is loaded with compressed air, within a predefined pressure range, it being possible for an outlet opening (20) of the through hole (19) to be closed in a pressure-tight manner by way of the housing covering (22), the through hole (19) having a diameter in the range from 0.2 mm to 2 mm, preferably from 0.8 mm to 1.2 mm, and particularly preferably 1 mm.

2. Device according to Claim 1, **characterized in that** the through hole (19) is arranged so as to establish a connection between a compressed air line within the component which is loaded with compressed air and the atmosphere outside the component which is loaded with compressed air.

3. Device according to Claim 1 or 2, **characterized by** a seal (24), in particular an O-ring, which is arranged between the outlet opening (20) of the through hole (19) and the housing covering (22) and is configured so as to close the through hole (19) by way of the housing covering (22) in a pressure-tight manner.

4. Device according to one of the preceding claims, **characterized by** a diameter or cross section of the seal hole (19) which is configured so as to indicate a pressure within a pressure range to be indicated of the system which is loaded with compressed air by means of an acoustic signal, the frequency and the sound pressure level of the acoustic signal lying within the auditory sensation area of an average human ear.

5. Air preparation unit for a compressed air system of a motor vehicle, in particular of a utility vehicle, having a multiple-circuit protection valve (2) and a control unit (4), **characterized by** a device for indicating existing compressed air with a through hole (19) within a housing (21) of a component which is loaded with compressed air of the system which is loaded with compressed air, which through hole (19) is configured so as to acoustically indicate, as a throttle point, the existing pressure in the component which is loaded with compressed air, within a predefined pressure range, the through hole (19) being arranged within the housing (21) of the multiple-circuit protection valve (2), and it being possible for an outlet opening (20) of the through hole (19) to be closed in a pressure-tight manner by means of the control unit (4) as housing covering (22).

6. Air preparation unit according to Claim 5, **characterized in that** the through hole (19) is routed from a main supply line (16) at the inlet port of the multiple-circuit protection valve (2) through the housing (29) of the multiple-circuit protection valve (2) to the outside.

7. Air preparation unit according to either of Claims 5 and 6, **characterized by** a configuration of the through hole (19) so as to reduce an existing system pressure in the multiple-circuit protection valve (2), in particular so as to reduce the system pressure as far as a closing pressure which is characteristic of circuit safety valves (10) which are present in the multiple-circuit protection valve (2).

8. Air preparation unit according to one of Claims 5 to 7, **characterized by** an arrangement of the seal (24) in the housing of the control unit (4) for the pressure-tight closure of the outlet opening (20) of the through hole (19) outside an interior space (26) of the control unit (4), the interior space (26) of the control unit (4) being sealed by way of a further seal (28) with respect to the housing (21) of the multiple-circuit protection valve (2).

9. Motor vehicle, in particular utility vehicle, **characterized by** a device for indicating existing compressed air within a system which is loaded with compressed air according to one of Claims 1 to 4, and/or an air preparation unit for a compressed air system according to one of Claims 5 to 8.

10. Method for indicating existing compressed air within an air preparation unit according to one of Claims 5 to 8, **characterized in that**, as a result of removal of a housing covering (22) of a component which is loaded with compressed air, compressed air of the system which is loaded with compressed air escapes through a through hole (19) which is configured as a throttle point, and the escape of the compressed air is indicated acoustically.

11. Method for producing a device for indicating existing compressed air within a system which is loaded with compressed air according to one of Claims 1 to 4, **characterized in that** the through hole (19) is produced by means of drilling and/or milling through the housing (21) of a component which is loaded with compressed air as far as into a compressed air line, the through hole (19) having a cross section which enables the acoustic indication of a pressure in the compressed air line within a pressure range to be indicated, and the through hole (19) being closed by means of a housing covering (22) in a pressure-tight manner.

12. Method according to Claim 11, **characterized in that** the through hole (19) is arranged on a main supply line (16) at the inlet port of a multiple-circuit protection valve (2).

## Revendications

1. Dispositif permettant d'indiquer l'air comprimé présent à l'intérieur d'un système alimenté en air comprimé, le système alimenté en air comprimé présentant un boîtier (21) et un recouvrement de boîtier (22),
**caractérisé par** un trou traversant (19) à l'intérieur du boîtier (21) d'un composant alimenté en air comprimé du système alimenté en air comprimé qui, en tant que point d'étranglement, est configuré pour indiquer de manière acoustique la pression présente dans le composant alimenté en air comprimé à l'intérieur d'une plage de pression prédéterminée, dans lequel une ouverture de sortie (20) du trou traversant (19) peut être fermée de manière étanche à la pression par le recouvrement de boîtier (22), le trou traversant (19) présentant un diamètre dans la plage de 0,2 mm à 2 mm, de préférence de 0,8 mm à 1,2 mm et de plus grande préférence égal à 1 mm.

2. Dispositif selon la revendication 1, **caractérisé en ce que** le trou traversant (19) est disposé pour établir un raccordement entre une conduite d'air comprimé à l'intérieur du composant alimenté en air comprimé et l'atmosphère à l'extérieur du composant alimenté en air comprimé.

3. Dispositif selon la revendication 1 ou 2, **caractérisé par** un joint (24), en particulier un joint torique, qui est disposé entre l'ouverture de sortie (20) du trou traversant (19) et le recouvrement de boîtier (22) et est configuré pour fermer de manière étanche à la pression le trou traversant (19) par le recouvrement de boîtier (22).

4. Dispositif selon l'une quelconque des revendications précédentes, **caractérisé par** un diamètre ou une section transversale du trou d'étanchéité (19) qui est configuré(e) pour indiquer au moyen d'un signal acoustique une pression à l'intérieur d'une plage de pression à indiquer du système alimenté en air comprimé, la fréquence et le niveau de pression acoustique du signal acoustique étant situés dans la surface d'écoute d'une oreille humaine moyenne.

5. Unité de traitement d'air pour un système à air comprimé d'un véhicule automobile, en particulier d'un véhicule utilitaire, présentant une soupape de protection à plusieurs circuits (2) et une unité de commande (4),
**caractérisée par** un dispositif permettant d'indiquer l'air comprimé présent, comprenant un trou traversant (19) à l'intérieur d'un boîtier (21) d'un composant alimenté en air comprimé du système alimenté en air comprimé qui, en tant que point d'étranglement, est configuré pour indiquer de manière acoustique la pression présente dans le composant alimenté en air comprimé à l'intérieur d'une plage de pression prédéterminée, le trou traversant (19) étant disposé à l'intérieur du boîtier (21) de la soupape de protection à plusieurs circuits (2) et une ouverture de sortie (20) du trou traversant (19) pouvant être fermée de manière étanche à la pression au moyen de l'unité de commande (4) comme recouvrement de boîtier (22).

6. Unité de traitement d'air selon la revendication 5, **caractérisée en ce que** le trou traversant (19) est amené depuis une conduite d'alimentation principale (16) à l'orifice d'entrée de la soupape de protection à plusieurs circuits (2) à travers le boîtier (29) de la soupape de protection à plusieurs circuits (2) jusqu'à l'extérieur.

7. Unité de traitement d'air selon l'une quelconque des revendications 5 ou 6, **caractérisée par** une configuration du trou traversant (19) permettant de réduire une pression de système présente dans la soupape de protection à plusieurs circuits (2), en particulier de réduire la pression de système jusqu'à une pression de fermeture caractéristique pour des soupapes de protection circulaires (10) présentes dans la soupape de protection à plusieurs circuits (2).

8. Unité de traitement d'air selon l'une quelconque des revendications 5 à 7, **caractérisée par** une disposition du joint (24) dans le boîtier de l'unité de commande (4) pour une fermeture étanche à la pression de l'ouverture de sortie (20) du trou traversant (19) à l'extérieur d'un espace intérieur (26) de l'unité de commande (4), l'espace intérieur (26) de l'unité de commande (4) étant rendu étanche par un joint supplémentaire (28) par rapport au boîtier (21) de la soupape de protection à plusieurs circuits (2).

9. Véhicule automobile, en particulier véhicule utilitaire, **caractérisé**
**par** un dispositif permettant d'indiquer l'air comprimé présent à l'intérieur d'un système alimenté en air comprimé selon l'une quelconque des revendications 1 à 4, et/ou
une unité de traitement d'air pour un système à air comprimé selon l'une quelconque des revendications 5 à 8.

10. Procédé permettant d'indiquer la pression d'air présente à l'intérieur d'une unité de traitement d'air selon l'une quelconque des revendications 5 à 8, **caractérisé en ce que** suite au retrait d'un recouvrement de boîtier (22) d'un composant alimenté en air comprimé d'air comprimé du système alimenté en air comprimé par un trou traversant, de l'air comprimé du système alimenté en air comprimé s'échappe à travers un trou traversant (19) réalisé en tant que point d'étranglement, et la fuite de l'air comprimé est indiquée de manière acoustique.

11. Procédé de fabrication d'un dispositif permettant d'indiquer l'air comprimé présent à l'intérieur d'un système alimenté en air comprimé selon l'une quelconque des revendications précédentes 1 à 4,
**caractérisé en ce que**
le trou traversant (19) est généré par perçage et/ou fraisage à travers du boîtier (21) d'un composant alimenté en air comprimé jusque dans une conduite d'air comprimé, le trou traversant (19) présentant une section transversale qui permet l'indication acoustique d'une pression dans la conduite d'air comprimé à l'intérieur d'une plage de pression à indiquer, et
le trou traversant (19) est fermé de manière étanche à la pression au moyen d'un recouvrement de boîtier (22).

12. Procédé selon la revendication 11, **caractérisé en ce que** le trou traversant (19) est disposé sur une conduite d'alimentation principale (16) à l'orifice d'entrée d'une soupape de protection à plusieurs circuits (2).
